# EUROPEAN PATENT SPECIFICATION

(11) **EP 3 927 675 B1**
(45) Date of publication and mention of the grant of the patent: **01.11.2023**
(21) Application number: 20705981.7
(22) Date of filing: 21.02.2020
(51) Int. Cl.: C05C 5/00, C05C 5/04, C05D 9/02, C05G 3/00, C05G 5/30

(54) **PARTICULATE COMPOSITION COMPRISING CALCIUM NITRATE AND MOLYBDENUM AND METHOD FOR THE MANUFACTURE THEREOF**
TEILCHENFÖRMIGE ZUSAMMENSETZUNG MIT CALCIUMNITRAT UND MOLYBDÄN UND VERFAHREN ZUR HERSTELLUNG DAVON
COMPOSITION PARTICULAIRE COMPRENANT DU NITRATE DE CALCIUM ET DU MOLYBDÈNE ET SON PROCÉDÉ DE FABRICATION

(30) Priority: 22.02.2019 EP 19158892
(43) Date of publication of application: 29.12.2021
(73) Proprietor: Yara International ASA, 0277 Oslo (NO)
(72) Inventor: FROGNER, Tore, 0277 OSLO (NO); KIRKEBØEN NÆSS, Mari, 3905 PORSGRUNN (NO); MYRSTAD, Amund, 3905 PORSGRUNN (NO)
(74) Representative: AWA Sweden AB
(86) International application number: PCT/EP2020/054609
(87) International publication number: WO 2020/169795

(56) References cited:
- US-A- 5 433 766
- US-A1- 2011 232 345
- DATABASE WPI Week 201704 Thomson Scientific, London, GB; AN 2016-66300W XP002793150, & CN 106 007 905 A (ANHUI XINTIANDI BIOLOGICAL FERTILIZER CO) 12 October 2016 (2016-10-12)

## Description

### Field of the invention

The present invention concerns a method for the manufacture of a solid, homogeneous particulate composition comprising calcium nitrate and molybdenum, a solid, homogeneous particular composition comprising calcium nitrate and molybdenum and the use of this composition as a fertilizer.

### Background of the invention

The primary nutrients for plants are nitrogen (N), phosphorus (P) and potassium (K). Moreover, plants also need significant amounts of the secondary nutrients, calcium (Ca), magnesium (Mg), and sulphur (S). In addition, plants need small amounts of the micronutrients, boron (B), copper (Cu), iron (Fe), manganese (Mn), molybdenum (Mo) and zinc (Zn).

Fertilizer products are designed to provide these nutrients to plants. Some fertilizers may, for example, provide all the nutrients, while other fertilizer products may provide a selection of primary-, secondary- and micronutrients. The fertilizer products can be specialized in order to meet specific agronomic requirements of the crop for which they are to be used. The fertilizer products may also be specialized with respect to the soil for which they are intended.
A fertilizer product including micronutrients solves the problem of providing micronutrients to plants in an efficient way, i.e. together with the primary nutrients, in a chemical form that is available for take-up by the plants and in a dosage form (mostly liquid or solid particulate fertilizer particles) that is easily applied onto the field where the plants are cultivated,

Typically, micronutrients can be applied as a coating onto solid fertilizer particles, being granules, prills, flakes and the like; they can also be blended into the bulk of fertilizer powders or fertilizer solutions.

Calcium nitrate-based fertilizers are widely used today in agriculture. Calcium nitrate is very soluble in water (1.2 kg/L at 25 °C), so it readily decomposes in soils if moisture is present and it can be used in fertigation. It supplies two types of nutrients: nitrogen and calcium. Nitrogen is supplied as nitrate ions, which is the preferred form of N supply for plants: nitrate ions can be taken up directly by the plants through their roots, whereas other forms of N, such as urea and ammonium ions must be transformed into nitrates to be available to plants. Calcium is a secondary nutrient and is used in a large number of processes in a plant, such as cell wall construction and general structure, nutrient uptake, plant defense response, colour, shelf-life.

It is well known in the field of calcium nitrate fertilizers to prepare homogeneous calcium nitrate fertilizer particles containing micronutrients. CN 108147859 (Ren et al, 2016) discloses a method to manufacture homogeneous particles comprising calcium nitrate, magnesium nitrate, zinc, iron, manganese, boron and molybdenum. The molybdenum source is not specified.

CN106007905 (Zhou, 2016) discloses a manufacturing method of a fertilizer product comprising calcium molybdate and ammonium heptamolybdate.

US5433766 (Wing, 1995) discloses a method to prepare a fertilizer solution by mixing, at room temperature, an aqueous solution of calcium nitrate, an aqueous solution comprising ammonium paramolybdate and an aqueous solution comprising magnesium, iron, manganese, zinc and copper. A solid mostly comprising calcium phosphate precipitated out of the solution.

US20110232345 (Szöke, 2011) discloses a fertilizer composition comprising 17 to 22 weight% of calcium nitrate and 0.001 to 0.005 weight% of ammonium molybdate. The fertilizer is prepared by mixing poultry feathers and inorganic salts in an aqueous environment at room temperature.

### Summary of the invention

According to one aspect of the invention, a method for the production of a solid, homogeneous particulate composition is provided. This method comprises the steps of: a) providing a calcium nitrate melt; b) adding a source of molybdenum to the calcium nitrate melt provided in step a), such that the concentration of molybdenum in the melt ranges from 0.001 to 1.0 weight%; c) processing the calcium nitrate melt obtained in step b) to obtain a solid, homogeneous particulate composition, wherein the solid homogeneous particulate composition comprises at least 50 weight% of calcium nitrate; characterized in that the molybdenum source is a compound comprising molybdenum atoms in an octahedral Mo₇O₂₄⁶⁻ configuration.

According to another aspect, a solid, homogeneous particulate composition comprising from 0.001 to 1.0 weight% of molybdenum and at least 50 weight% of calcium nitrate, characterized in that molybdenum is present as molybdenum atoms in an octahedral Mo₇O₂₄⁶⁻ configuration, is provided.

According to another aspect, the use of the solid, homogeneous particulate composition produced according to the method described herein or the solid, homogeneous particulate composition described herein, as a fertilizer or in fertigation is provided.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight%", "weight percent" or "%wt" here and throughout the description unless otherwise defined, refers to the relative weight of the respective component in a formulation based on the overall weight of that formulation.

According to one aspect of the invention, a method for the production of a solid, homogeneous particulate composition is provided. This method comprises the steps of: a) providing a calcium nitrate melt; b) adding a source of molybdenum to the calcium nitrate melt provided in step a), such that the concentration of molybdenum in the melt ranges from 0.001 to 1.0 weight%; c) processing the calcium nitrate melt obtained in step b) to obtain a solid homogeneous particulate composition, wherein the solid homogeneous particulate composition comprises at least 50 weight% of calcium nitrate; characterized in that the molybdenum source is a compound comprising molybdenum atoms in an octahedral Mo₇O₂₄⁶⁻ configuration.

As used herein, a solid, homogeneous material relates to a material where the local concentration in different elements is identical in all parts of the material. However, the material may not necessarily be monophasic, i.e. it may contain chemical compounds in different states. For example, a melt may comprise small solid particles. Such a melt would be considered homogeneous for the purpose of this disclosure if the solid particles are equally distributed within the liquid phase. For a large range of industrial products, for example fertilizers, it is highly desirable to obtain a solid, homogeneous particulate material. For fertilizers, it allows a uniform distribution of the nutrients in a field in time and space. Homogeneous particulate fertilizers containing micronutrients will supply micronutrients to the plants on a longer period of time compared to fertilizers, wherein the micronutrient source is only found in the coating. In order to produce a solid, homogeneous particulate material, a homogeneous melt should be provided. Heterogeneity can be caused by several mechanisms, including solids precipitation.
The calcium nitrate melt used in the method as described above contains calcium nitrate as its major component. It comprises at least 50 weight% of calcium nitrate based on the total weight of the melt. The melt may comprise a certain amount of water, for example, the melt may comprise up to 20 weight% of water. It may also comprise less than that, for example, at most 10 weight%, in particular at most 5 weight%, more in particular at most 4 weight%, even more in particular at most 3 weight%. The melt may comprise other solids than calcium nitrate. It may comprise other nutrients useful to plants, such as ammonium nitrate, but it may also comprise elements that do not contribute to an agronomical effect, such as fillers, additives and impurities. In one embodiment, the calcium nitrate melt comprises at least 60 weight%, in particular at least 65 weight%, more in particular at least 70 weight%, even more in particular at least 75 weight%, even more in particular at least 80 weight%, even more in particular at least 90 weight%, of calcium nitrate, based on the total weight of the melt. After the melt is processed and solid, particulate compositions are obtained, these compositions may contain at least 50 weight%, in particular at least 60 weight%, more in particular at least 70 weight%, of calcium nitrate.

It is well known that some calcium salts or complexes are poorly soluble in water, for example calcium sulfate (gypsum) and calcium phosphate. Calcium molybdate (CaMoO₄) is also poorly soluble in water (0.005 g/100 mL at 25°C). So when mixing a composition comprising water and calcium nitrate with a source of molybdenum, there is a risk that calcium molybdate will precipitate out of the solution.

Micronutrients such as boron, copper, iron, manganese, molybdenum and zinc have each different roles in the life cycle of a plant or crop. The requirements in each nutrient depend on the type of plant and the stage of development of the plant. It is an advantage to supply several nutrients with a single application as it requires less work from the farmer. A number of suitable sources for each element are well known in the fertilizer industry. It was found that it was possible to add a source of molybdenum to a calcium melt without affecting the processing step. Molybdenum is a micronutrient required by plants and it is known to be involved in a range of biological processes in plants. For example, it is known to increase the ability of plants to fix nitrogen present in the soil, leading to a better efficiency of fertilizer applications. Surprisingly, it was found that some compounds comprising molybdenum, for example molybdenum salts and complexes, where molybdenum is present as an octahedral Mo₇O₂₄⁶⁻, lead to a slow precipitation of calcium molybdate when added to an aqueous solution comprising calcium cations.

Molybdenum is taken up by plants as the tetrahedral oxide ion MoO₄²⁻, so this form of molybdate is the preferred form for molybdenum sources to be used in fertilizers. Sodium molybdate (Na₂MoO₄) contains molybdenum atoms with the same configuration and is a well-known suitable source of molybdenum for plants. Calcium molybdate (CaMoO₄) also contains molybdenum with a tetrahedral configuration. It was observed that when an aqueous solution of sodium molybdate is mixed with an aqueous solution of calcium nitrate, precipitation of calcium molybdate occurs instantly. So, if one would add sodium molybdate to a melt comprising calcium nitrate, there is a high risk of calcium molybdate precipitation, which would create an inhomogeneous melt. Whereas, if ammonium heptamolybdate ((NH₄)₆Mo₇O₂₄), wherein the molybdenum atoms have an octahedral configuration, is added to an aqueous solution of calcium nitrate, the first precipitation occurs only after 24 h. Without being bound by theory, it is thought that calcium molybdate is formed quickly in presence of sodium molybdate because the molybdenum has already the required configuration (MoO₄²⁻); where in the case of ammonium heptamolybdate, the molybdenum oxide has to rearrange and split before it can form calcium molybdate. Ammonium molybdate is a known suitable source for molybdenum in fertilizers.

In one embodiment, the concentration of molybdenum in the melt ranges from 0.001 to 1.0 weight%. In one embodiment, the concentration of molybdenum in the melt ranges from 0.001 to 0.8 weight%, in particular from 0.005 to 0.5 weight%, more in particular from 0.01 to 0.1 weight%. In one embodiment, the molybdenum source is ammonium heptamolybdate. Ammonium heptamolybdate is a commercially available compound. It may be found in different hydration states. The dihydrate, (NH₄)₆Mo₇O₂₄·2H₂O, and the tetrahydrate, (NH₄)₆Mo₇O₂₄·4H₂O, are the most common available compounds. Ammonium heptamolybdate contains about 58 weight% of molybdenum. In one embodiment, the molybdenum source is ammonium heptamolybdate tetrahydrate. It is expected that the molybdate source will not react with other chemical components during the mixing, granulation or other processing stages.

There are several methods to produce a solid, homogeneous particulate composition comprising calcium nitrate and other nutrients. Most of them are based on the preparation of a melt, i.e. a heated concentrated solution of calcium nitrate, followed by a processing step.

A solution comprising calcium nitrate can be obtained in several ways. For example, dry solid calcium nitrate particles may be dissolved in water. The solution can also be obtained directly from an industrial process. For example, the nitrophosphate process used to produce fertilizers containing nitrogen and phosphorous is known to produce a calcium nitrate solution as a by-product. It is also possible to obtain a solution of calcium nitrate by dissolving limestone, which comprises calcium carbonate, in nitric acid.

Once the calcium melt is ready, the processing steps can take place. Several methods, such as prilling and granulation, are available to generate a particulate composition from a melt comprising calcium nitrate. Most methods involve the formation of drops from the melt: for example, drops can be formed with a prilling equipment, like a prilling bucket or by spraying the melt through nozzles. The drops are cooled until solidification is achieved. The cooling method depends on the choice of the processing method. The melt may also be cooled in large sections and subsequently crushed to obtain particles with the desired size profile. When a melt is transformed into solid particles, the composition of the melt and of the particles are almost identical, except for the water that has been removed. For example, if a melt contains at least 50 weight% of calcium nitrate based on the total weight of the melt, the solid particles obtained from the melt will contain also at least 50 weight% of calcium nitrate.

In one embodiment, the calcium nitrate melt contains 0.1 to 20 weight% of ammonium nitrate. In particular, it may contain 0.1 to 10 weight% of ammonium nitrate. More in particular, it may contain 1 to 8 weight% of ammonium nitrate. During the production of the calcium nitrate solution, it may be that the calcium nitrate solution contains an excess of acid, for example nitric acid or phosphoric acid. To neutralize it, it may be advantageous to add ammonia as a base because the ammonium ions are nutrients for plants as well, they can be directly absorbed by plants or transformed into nitrates in the soil, which are easily absorbed by plants. Therefore, the concentration of nutrients in the material does not decrease.

The melting temperature of pure calcium nitrate is 561 °C, however, if a calcium nitrate solution comprises water, organic or inorganic chemical compounds, or impurities or mixtures thereof, it may be enough to heat the solution up to between 100 and 120 °C to form a melt, in particular it may be enough to heat the calcium nitrate solution to about 110 °C.

Once the calcium nitrate solution is a melt, sources of other elements may be added as powders, particles or solutions. Powders and particles are preferred since it does not add any water to the melt. The water content of the melt has to be sufficiently low for the processing step, so any added water at that step would have to be removed, by heating for example, during or prior to the processing step which leads to higher production costs and times.

In one embodiment, a source of boron and a source of zinc are added to the calcium melt before the processing step. Boron and zinc are two of the micronutrients required by plants. They are responsible for several biological processes in a plant: for example, boron plays a role in pollen viability, flower and fruit development, it is needed for the production of nucleic acid and plant hormones, it is also essential for the structure integrity of plant membranes. Zinc is used as a catalyst in several enzymes responsible for tasks such as protein synthesis and carbohydrate metabolism. It is also used by the superoxide dismutase which protects plants against reactive radicals.

In one embodiment, the boron source used in the production method described above is selected from the group consisting of sodium borate pentahydrate, boric acid and ulexite. Sodium borate pentahydrate, also known as borax, is a suitable source of boron in this method because it does not react with the calcium nitrate melt. Borax is a known suitable source of boron for fertilizers. Boric acid and ulexite are also suitable sources of boron for fertilizers and suitable for the manufacture method described above, as they do not react with calcium nitrate or the other micronutrient sources. Ulexite is a natural mineral containing boron as a sodium calcium borate hydroxide salt, its formula is NaCaB₅O₆(OH)₆·5H₂O.

In one embodiment, the zinc source used in the production method described above is zinc oxide. Zinc oxide is a suitable source of zinc in this method because it does not react with the calcium nitrate melt. It also has a high concentration of zinc (80 weight%) and is commercially available as a free-flowing powder which is easy to handle in a production unit. In one embodiment, the zinc oxide is a micronized zinc oxide. It was observed that using a source of micronized zinc oxide increases its availability to the plant when the fertilizer is applied to crops.

When the calcium nitrate melt contains all the elements required, it may be required to mix the melt to ensure that the melt is homogeneous and the nutrient sources are evenly distributed in the melt. At this stage, excess water may be evaporated to reach the desired water content.

In one embodiment, the particulate composition obtained according to the method described above is coated with an amount of a conditioning agent. Calcium nitrate is a very hygroscopic material, meaning it will absorb water moisture from the ambient air very easily. If it absorbs too much, the quality of the particles will decrease: the particles become sticky and wet, so they are more difficult to manipulate, store and distribute in the fields. To overcome these issues, a coating with an amount of a conditioning agent may be applied on the particulate composition. The coating will reduce the rate of water absorption by the particulate composition and allow longer storage time and transport over longer distances.

In one embodiment, the conditioning agent is a composition comprising a wax, a mineral oil, a resin and a viscoelastic elastomer. It was found that a conditioning agent composition comprising 10 to 50 weight% of wax, 40 to 90 weight% of a mineral oil, 1 to 15 weight% of a resin being mineral oil-soluble and miscible with wax and mineral oil, and 0.1 to 1.0 weight% of a viscoelastic elastomer is particularly suitable for particulate compositions comprising calcium nitrate. A suitable composition for a conditioning agent is described in WO 2016/083435 (Yara, 2016).

In one embodiment, the amount of the conditioning agent composition applied to the particulate material is comprised between 0.05 and 2.0 weight% of the final particulate composition. In particular, the amount of the conditioning agent composition may be between 0.05 and 1.0 weight%. More in particular, it may be between 0.20 and 0.60 weight%. The right amount of conditioning agent composition may be applied to the particulate composition. If too little is applied, it will not be able to reduce the water absorption by the fertilizer particle. If too much is applied, the fertilizer particle will become sticky and will not be easy to handle or distribute to the plants.

In one embodiment, seeding particles are added to the melt before processing the melt. It can be beneficial for the processing step that the melt contains some solid particles as they can help granulation or solidification of the melt. In particular, particles obtained previously by the method disclosed herein may be added to the melt. Optionally, particles essentially consisting of calcium nitrate may be added to the melt. The seeding particles must have a smaller size than the desired size of the final product. Particles obtained previously by the method disclosed herein may be crushed to the required size before being added to the melt.

According to another aspect, a solid homogeneous particulate composition comprising from 0.001 to 1.0 weight% of molybdenum and at least 50 weight% of calcium nitrate, characterized in that molybdenum is present as molybdenum atoms in an octahedral Mo₇O₂₄⁶⁻ configuration, is provided.

Calcium nitrate is highly soluble in water (1.2 kg/L at 20°C), so it is an interesting chemical to use when an aqueous solution with high concentration in either or both elements (calcium and nitrogen) is required. For example, in agriculture, calcium nitrate is highly suitable for fertigation, which refers to the distribution of fertilizers as aqueous solutions via the irrigation system. If other types of nutrients are added into the calcium nitrate particles, water-soluble sources should be favored because they would solubilize in the fertigation solution and be available for distribution. The chemical compatibility of the various nutrient sources should also be investigated to make sure that no undesired chemical reaction or precipitation occurs when different chemical compounds are mixed together in water. Surprisingly, it was found that molybdenum compounds comprising molybdenum atoms in an octahedral Mo₇O₂₄⁶⁻ configuration are a particularly suitable source of molybdenum to prepare water-soluble particulate compositions comprising calcium nitrate and a molybdenum source. It was found that this type of molybdenum compound does not react readily with calcium nitrate to form the water-insoluble complex calcium molybdate. It is expected that the molybdenum source does not react during the mixing and granulation stages, so that molybdenum retains its structure as octahedral Mo₇O₂₄⁶⁻ in the final particles. It ensures that the molybdate source does not precipitate and stays in solution and available to plants. Calcium nitrate fertilizers can be produced in different grades or purities. To obtain the best fertilizing effect, a high concentration of calcium nitrate is desirable. The composition disclosed herein contains at least 50 weight% of calcium nitrate. Optionally, it may contain at least 55 weight% of calcium nitrate. Optionally, it may contain at least 60 weight% of calcium nitrate. Optionally, it may contain at least 65 weight% of calcium nitrate. In one embodiment, the composition may contain at least 70 weight% of calcium nitrate. In one embodiment, the composition may contain at least 80 weight% of calcium nitrate. In one embodiment, the composition may contain at least 90 weight% of calcium nitrate. Molybdenum trioxide is another well-known source of molybdenum suitable for use in agriculture, but it is very little water-soluble (1 g/L at 18 °C).

In one embodiment, the solid, homogeneous particulate composition comprises 0.1 to 20 weight% of ammonium nitrate. In particular, it may contain 0.1 to 10 weight% of ammonium nitrate. More in particular, it may contain 1 to 8 weight% of ammonium nitrate. Ammonium ions are another source of N for plants. They are slowly absorbed by plants as such and also transformed into nitrates by microbes or bacteria found in soils. Adding an ammonium source to a nitrate fertilizer can increase the duration of the fertilizing effect of the composition.

In one embodiment, the molybdenum source in the composition described above is ammonium heptamolybdate, in particular the tetrahydrate compound having the chemical composition (NH₄)₆Mo₇O₂₄·4H₂O. Ammonium heptamolybdate comprises molybdenum with the right configuration and is commercially available from several suppliers as the tetrahydrate form.

Ammonium molybdate tetrahydrate is highly soluble in water (653 g/L at 20°C). Other ammonium heptamolybdate hydrates are also suitable to use in this composition.

In one embodiment, the composition comprises between 0.001 and 1.0 weight% of molybdenum, in particular between 0.001 and 0.1 weight%. Plants do not require a large amount of molybdenum. Applying fertilizers with a weight concentration of between 0.001% and 1.0% of molybdenum is sufficient to supply enough molybdenum to the plant. Optionally, the composition may comprise between 0.001 and 0.1 weight% of molybdenum. In one embodiment, the composition comprises between 0.005 and 0.1 weight% of molybdenum.

In one embodiment, the composition further comprises zinc and boron.

In one embodiment, the composition comprises between 0.001 and 5.0 weight% of boron, in particular between 0.1 and 1.0 weight%. Plants do not require a large amount of boron compared to the main nutrients, such as N, P and K. Applying fertilizers with a weight concentration of between 0.1% and 5.0% of boron is sufficient to supply enough boron to the plant. Optionally, the composition may comprise between 0.001 and 1.0 weight% of boron.

In one embodiment, the composition comprises between 0.001 and 5.0 weight% of zinc, in particular between 0.1 and 1.0 weight%. Plants do not require a large amount of zinc compared to the main nutrients, such as N, P and K. Applying fertilizers with a weight concentration of between 0.1% and 5.0 % of zinc is sufficient to supply enough zinc to the plant. Optionally, the composition may comprise between 0.001 and 1.0 weight% of zinc.
It is desirable that the concentration in calcium and nitrate is as high as possible in the final composition to obtain the highest fertilizing effect possible. In one embodiment, the composition comprises at least 20 weight% of calcium, expressed as CaO content. In particular, it comprises at least 21 weight% of calcium, expressed as CaO content. More in particular, it comprises at least 22 weight% of calcium, expressed as CaO content. Even more in particular, it comprises at least 23 weight% of calcium, expressed as CaO content. Even more in particular, it comprises at least 24 weight% of calcium, expressed as CaO content.

In one embodiment, the composition comprises between 10 and 40 weight% of nitrogen, in particular between 12 and 25 weight%, more in particular between 13 and 17 weight%. Nitrogen is one of the primary nutrients for plants and is required in large amounts. Nitrogen may be present in three different forms: urea, ammonium ion or nitrate ion.

In one embodiment, the solid, homogenous particulate composition comprises about 15 weight% of nitrogen, about 25 weight% of calcium, expressed as calcium oxide, about 0.3 weight% of boron, about 0.2 weight% of zinc and about 0.01 weight% of molybdenum.

In one embodiment, the solid, homogenous particulate composition comprises about 14 weight% of nitrogen as nitrate, about 1 weight% of nitrogen as ammonium, about 25 weight% of calcium, expressed as calcium oxide, about 0.3 weight% of boron, about 0.2 weight% of zinc and about 0.01 weight% of molybdenum, wherein boron is present as borax, zinc, as zinc oxide, and molybdenum as ammonium heptamolybdate.

In one embodiment, the particulate composition is coated with an amount of a conditioning agent composition comprising a wax, a mineral oil, a resin and a viscoelastic elastomer. Calcium nitrate is a very hygroscopic material, meaning it will absorb water moisture from the ambient air very easily. If it absorbs too much, the quality of the particles will decrease: for example, they will become dusty and more fragile, so they will not tolerate storage and transport. To overcome these issues, a coating with a conditioning agent composition may be applied on the particulate composition. The coating will reduce the rate of water absorption by the particulate composition and allow longer storage time and transport over longer distances.

It was found that a conditioning agent composition comprising 10 to 50 weight% of wax, 40 to 90 weight% of a mineral oil, 1 to 15 weight% of a resin being mineral oil-soluble and miscible with wax and mineral oil, and 0.1 to 1.0 weight% of a viscoelastic elastomer is particularly suitable for particulate compositions comprising calcium nitrate. A suitable composition for a conditioning agent is described in WO 2016/083435 (Yara, 2016).

In one embodiment, the amount of the conditioning agent applied to the particulate material is comprised between 0.05 and 2.0 weight% of the final particulate composition. The right amount of conditioning agent should be applied to the particulate composition. If too little is applied, it will not be able to reduce the water absorption by the fertilizer particle. If too much is applied, the fertilizer particle will become sticky and will not be easy to handle or distribute to the plants.

According to another aspect, the use of a solid, homogeneous particulate composition obtained by a method described above or a solid, homogeneous particulate composition described above as a fertilizer or in fertigation is provided.

### Experimental part

Example 1: 100 g of calcium nitrate particles comprising 5.8 weight% of ammonium nitrate with 0.3 weight% of boron was heated up to approximately 110 °C and formed a melt. Water (1 - 2 g) was added followed by zinc oxide (0.25 g) and ammonium heptamolybdate tetrahydrate (0.01 - 0.02 g). The melt was stirred for 30-60 seconds and seeding particles were added. The melt was cast on a steel plate, left to cool and crushed to obtain solid, homogeneous particles.

Example 2: Two batches of calcium nitrate particles containing no water-insoluble material were heated up to form a melt. 1.0 wt% of Mo in the form of sodium molybdate was added in the first batch and 1.0 wt% of Mo in the form of ammonium molybdate tetrahydrate was added in the second batch. Both melts were cast on a steel plate, left to cool and crushed to obtain homogeneous particles.

A 20 wt% solution in water of both products was prepared and stirred: solution A contained the calcium nitrate particles comprising ammonium molybdate and solution B contained the calcium nitrate particles comprising sodium molybdate. Solution A was almost fully solubilized within 20 minutes, whereas solution B contained a white precipitate which is assumed to be calcium molybdate. After 24 h at room temperature, less than 2% of the Mo from ammonium molybdate was recovered as a precipitate from solution A, and 25% of the Mo from sodium molybdate was recovered as a CaMoO₄ precipitate from solution B.

Example 3: A test in a calcium nitrate plant was performed. A melt comprising calcium ammonium nitrate was prepared and directed to a mixing tank. Three micronutrients sources (zinc oxide, borax and ammonium heptamolybdate tetrahydrate) were added to the mixing tank and the melt was mixed to obtain a good dispersion of the micronutrient sources in the melt. The melt was granulated in a pan granulator to obtain solid, homogeneous particles. Chemical analyses showed a molybdenum content between 0.001 and 0.01 weight%. Physical properties (caking, particle strength, dust analysis and water penetration) gave satisfactory results, such that the product was suitable for commercial use. The availability of the micronutrients to the plant was measured in a series of extraction tests (with water, aqueous solution of ammonium citrate, and aqueous solution of citric acid). Over 80% of the molybdenum was found to be available to the plant.

## Claims

1. Method for producing a solid, homogeneous particulate composition, comprising the steps of:
a) providing a calcium nitrate melt;
b) adding a source of molybdenum to the calcium nitrate melt provided in step a), such that the concentration of molybdenum in the melt ranges from 0.001 to 1.0 weight%;
c) processing the calcium nitrate melt obtained in step b) to obtain a solid homogeneous particulate composition, wherein the solid homogeneous particulate composition comprises at least 50 weight% of calcium nitrate ;
**characterized in that** the molybdenum source is a compound comprising molybdenum atoms in an octahedral Mo₇O₂₄⁶⁻ configuration.

2. The method according to claim 1, wherein the calcium nitrate melt comprises 0.1 to 20 weight% of ammonium nitrate, in particular 0.1 to 10 weight% of ammonium nitrate, more in particular 1 to 8 weight% of ammonium nitrate.

3. The method according to any one of claims 1 to 2, wherein the molybdenum source is ammonium heptamolybdate, in particular the tetrahydrate compound having the chemical composition (NH₄)₆Mo₇O₂₄·4H₂O.

4. The method according to any one of claims 1 to 3, wherein step b) comprises adding a source of zinc and a source of boron to the calcium melt provided in a).

5. The method according to claim 4, wherein the zinc source is zinc oxide.

6. The method according to any one of claims 4 to 5, wherein the boron source is selected from the group consisting of sodium borate pentahydrate, boric acid and ulexite.

7. The method according to any one of claims 1 to 6, wherein the method comprises a further step d): coating the granules obtained in step c) with an amount of a conditioning agent.

8. The method according to claim 7, wherein the conditioning agent is a composition comprising a wax, a mineral oil, a resin and a viscoelastic elastomer.

9. The method according to any one of claims 1 to 8, wherein step c) comprises the step of adding seeding particles to the melt before processing the melt.

10. Solid homogeneous particulate composition comprising from 0.001 to 1.0 weight% of molybdenum and at least 50 weight% of calcium nitrate, **characterized in that** molybdenum is present as molybdenum atoms in an octahedral Mo₇O₂₄⁶⁻ configuration.

11. The composition according to claim 10, further comprising 0.1 to 20 weight% of ammonium nitrate, in particular 0.1 to 10 weight% of ammonium nitrate, more in particular 1 to 8 weight% of ammonium nitrate.

12. The composition according to any one of claims 10 to 11, wherein molybdenum source is present as ammonium heptamolybdate, in particular the tetrahydrate form with the chemical composition (NH₄)₆Mo₇O₂₄·4H₂O.

13. The composition according to any one of claims 10 to 12, wherein the composition comprises between 0.001 and 0.1 weight% of molybdenum.

14. The composition according to any one of claims 10 to 13, wherein the composition further comprises zinc and boron.

15. The composition according to claim 14, wherein the composition comprises between 0.001 and 5.0 weight% of boron, in particular between 0.1 and 1.0 weight%.

16. The composition according to any one of claims 14 to 15, wherein the composition comprises between 0.001 and 5.0 weight% of zinc, in particular 0.1 and 1.0 weight%.

17. The composition according to any one of claims 10 to 16, wherein the composition comprises between 10 and 40 weight% of nitrogen, in particular between 12 and 25 weight%, more in particular between 13 and 17 weight%.

18. The composition according to any one of claims 10 to 17, wherein the composition comprises about 15 weight% of nitrogen, about 25 weight% of calcium, expressed as calcium oxide, about 0.3 weight% of boron, about 0.2 weight% of zinc and about 0.01 weight% of molybdenum.

19. The composition according to any one of claims 10 to 18, wherein the composition is coated with an amount of a conditioning agent composition comprising a wax, a mineral oil, a resin and a viscoelastic elastomer.

20. The composition according to claim 19 or method according to any one of claims 7 to 8, wherein the amount of the conditioning agent is comprised between 0.05 and 2.0 weight% of the final particulate composition.

21. Use of a solid, homogeneous particulate composition obtained by a method according to any one of claims 1 to 9 or a solid, homogeneous particulate composition according to any one of claims 10 to 20, as a fertilizer or in fertigation.

## Patentansprüche

1. Verfahren zur Herstellung einer festen homogenen teilchenförmigen Zusammensetzung, welches die folgenden Schritte umfasst:
a) die Bereitstellung einer Calciumnitratschmelze;
b) die Zugabe einer Molybdänquelle zu der in Schritt a) bereitgestellten Calciumnitratschmelze, so dass die Konzentration von Molybdän in der Schmelze im Bereich von 0,001 bis 1,0 Gew.-% liegt;
c) das verarbeiten der in Schritt b) erhaltenen Calciumnitratschmelze unter Erhalt einer festen homogenen teilchenförmigen Zusammensetzung, wobei die feste homogene teilchenförmige Zusammensetzung mindestens 50 Gew.-% Calciumnitrat umfasst;
**dadurch gekennzeichnet, dass** es sich bei der Molybdänquelle um eine Verbindung handelt, die Molybdänatome in einer oktaedrischen Mo₇O₂₄⁶⁻-Konfiguration umfasst.

2. Verfahren nach Anspruch 1, wobei die Calciumnitratschmelze 0,1 bis 20 Gew.-% Ammoniumnitrat umfasst, insbesondere 0,1 bis 10 Gew.-% Ammoniumnitrat, ganz insbesondere 1 bis 8 Gew.-% Ammoniumnitrat.

3. Verfahren nach einem der Ansprüche 1 bis 2, wobei es sich bei der Molybdänquelle um Ammoniumheptamolybdat handelt, wobei die Tetrahydratverbindung insbesondere die chemische Zusammensetzung (NH₄)₆Mo₇O₂₄·4H₂O aufweist.

4. Verfahren nach einem der Ansprüche 1 bis 3, wobei Schritt b) die Zugabe einer Zinkquelle und einer Borquelle zu der in a) bereitgestellten Calciumschmelze umfasst.

5. Verfahren nach Anspruch 4, wobei es sich bei der Zinkquelle um Zinkoxid handelt.

6. Verfahren nach einem der Ansprüche 4 bis 5, wobei die Borquelle aus der aus Natriumborat-pentahydrat, Borsäure und Ulexit bestehenden Gruppe ausgewählt ist.

7. Verfahren nach einem der Ansprüche 1 bis 6, wobei das Verfahren einen weiteren Schritt d) umfasst: das Beschichten des in Schritt c) erhaltenen Granulats mit einer Menge eines Konditionierungsmittels.

8. Verfahren nach Anspruch 7, wobei es sich bei dem Konditionierungsmittel um eine ein Wachs, ein Mineralöl, ein Harz und ein viskoelastisches Elastomer umfassende Zusammensetzung handelt.

9. Verfahren nach einem der Ansprüche 1 bis 8, wobei Schritt c) den Schritt der Zugabe von Impfpartikeln zu der Schmelze vor dem Verarbeiten der Schmelz umfasst.

10. Feste homogene teilchenförmige Zusammensetzung, umfassend 0,001 bis 1,0 Gew.-% Molybdän und mindestens 50 Gew.-% Calciumnitrat, **dadurch gekennzeichnet, dass** das Molybdän als Molybdänatome in einer oktaedrischen Mo₇O₂₄⁶⁻ -Konfiguration vorliegt.

11. Zusammensetzung nach Anspruch 10, weiterhin umfassend 0,1 bis 20 Gew.-% Ammoniumnitrat, insbesondere 0,1 bis 10 Gew.-% Ammoniumnitrat, ganz insbesondere 1 bis 8 Gew.-% Ammoniumnitrat.

12. Zusammensetzung nach einem der Ansprüche 10 bis 11, wobei die Molybdänquelle als Ammoniumheptamolybdat vorliegt, insbesondere als Tetrahydratverbindung mit der chemischen Zusammensetzung (NH₄)₆Mo₇O₂₄·4H₂O.

13. Zusammensetzung nach einem der Ansprüche 10 bis 12, wobei die Zusammensetzung zwischen 0,001 und 0,1 Gew.-% Molybdän umfasst.

14. Zusammensetzung nach einem der Ansprüche 10 bis 13, wobei die Zusammensetzung weiterhin Zink und Bor umfasst.

15. Zusammensetzung nach Anspruch 14, wobei die Zusammensetzung zwischen 0,001 und 5,0 Gew.-% Bor umfasst, insbesondere zwischen 0,1 und 1,0 Gew.-%.

16. Zusammensetzung nach einem der Ansprüche 14 bis 15, wobei die Zusammensetzung zwischen 0,001 und 5,0 Gew.-% Zink umfasst, insbesondere 0,1 und 1,0 Gew.-%.

17. Zusammensetzung nach einem der Ansprüche 10 bis 16, wobei die Zusammensetzung zwischen 10 und 40 Gew.-% Stickstoff umfasst, insbesondere zwischen 12 und 25 Gew.-%, ganz insbesondere zwischen 13 und 17 Gew.-%.

18. Zusammensetzung nach einem der Ansprüche 10 bis 17, wobei die Zusammensetzung etwa 15 Gew.-% Stickstoff, etwa 25 Gew.-% Calcium, ausgedrückt als Calciumoxid, etwa 0,3 Gew.-% Bor, etwa 0,2 Gew.-% Zink und etwa 0,01 Gew.-% Molybdän umfasst.

19. Zusammensetzung nach einem der Ansprüche 10 bis 18, wobei die Zusammensetzung mit einer Menge einer ein Wachs, ein Mineralöl, ein Harz und ein viskoelastisches Elastomer umfassenden Konditionierungsmittelzusammensetzung beschichtet ist.

20. Zusammensetzung nach Anspruch 19 oder Verfahren nach einem der Ansprüche 7 bis 8, wobei die Menge des Konditionierungsmittels zwischen 0,05 und 2,0 Gew.-% der letztendlich erhaltenen teilchenförmigen Zusammensetzung ausmacht.

21. Verwendung einer durch ein Verfahren nach einem der Ansprüche 1 bis 9 erhaltenen festen homogenen teilchenförmigen Zusammensetzung oder einer festen homogenen teilchenförmigen Zusammensetzung nach einem der Ansprüche 10 bis 20 als Düngemittel oder bei der Fertigation.

## Revendications

1. Procédé pour la production d'une composition particulaire homogène, solide comprenant les étapes de :
a) fourniture d'une masse fondue de nitrate de calcium ;
b) ajout d'une source de molybdène à la masse fondue de nitrate de calcium fournie dans l'étape a), de sorte que la concentration en molybdène dans la masse fondue se situe dans la plage de 0,001 à 1,0 % en poids ;
c) traitement de la masse fondue de nitrate de calcium obtenue dans l'étape b) pour obtenir une composition particulaire homogène solide, la composition particulaire homogène solide comprenant au moins 50 % en poids de nitrate de calcium ;
**caractérisé en ce que** la source de molybdène est un composé comprenant des atomes de molybdène dans une configuration Mo₇O₂₄⁶⁻ octaédrique.

2. Procédé selon la revendication 1, la masse fondue de nitrate calcium comprenant 0,1 à 20 % en poids de nitrate d'ammonium, en particulier 0,1 à 10 % en poids de nitrate d'ammonium, plus particulièrement 1 à 8 % en poids de nitrate d'ammonium.

3. Procédé selon l'une quelconque des revendications 1 à 2, la source de molybdène étant l'heptamolybdate d'ammonium, en particulier le composé tétrahydraté ayant la composition chimique (NH₄)₆Mo₇O₂₄·4H₂O.

4. Procédé selon l'une quelconque des revendications 1 à 3, l'étape b) comprenant l'ajout d'une source de zinc et d'une source de bore à la masse fondue au calcium fournie en a).

5. Procédé selon la revendication 4, la source de zinc étant l'oxyde de zinc.

6. Procédé selon l'une quelconque des revendications 4 à 5, la source de bore étant choisie dans le groupe constitué par le pentahydrate de borate de sodium, l'acide borique et l'uléxite.

7. Procédé selon l'une quelconque des revendications 1 à 6, le procédé comprenant une étape supplémentaire d) : revêtement des granules obtenus dans l'étape c) avec une quantité d'un agent de conditionnement.

8. Procédé selon la revendication 7, l'agent de conditionnement étant une composition comprenant une cire, une huile minérale, une résine et un élastomère viscoélastique.

9. Procédé selon l'une quelconque des revendications 1 à 8, l'étape c) comprenant l'étape d'ajout de particules d'ensemencement à la masse fondue avant le traitement de la masse fondue.

10. Composition particulaire homogène solide comprenant de 0,001 à 1,0 % de molybdène et au moins 50 % en poids de nitrate calcium, **caractérisé en ce que** le molybdène est présent comme atomes de molybdène dans une configuration Mo₇O₂₄⁶⁻ octaédrique.

11. Composition selon la revendication 10, comprenant en outre 0,1 à 20 % en poids de nitrate d'ammonium, en particulier 0,1 à 10 % en poids de nitrate d'ammonium, plus particulièrement 1 à 8 % en poids de nitrate d'ammonium.

12. Composition selon l'une quelconque des revendications 10 à 11, la source de molybdène étant présente en tant qu'heptamolybdate d'ammonium, en particulier la forme tétrahydratée ayant la composition chimique (NH₄)₆Mo₇O₂₄·4H₂O.

13. Composition selon l'une quelconque des revendications 10 à 12, la composition comprenant entre 0,001 et 0,1 % en poids de molybdène.

14. Composition selon l'une quelconque des revendications 10 à 13, la composition comprenant en outre du zinc et du bore.

15. Composition selon la revendication 14, la composition comprenant entre 0,001 et 5,0 % en poids de bore, en particulier entre 0,1 et 1,0 % en poids.

16. Composition selon l'une quelconque des revendications 14 à 15, la composition comprenant entre 0,001 et 5, 0 % en poids de zinc, en particulier entre 0,1 et 1,0 % en poids.

17. Composition selon l'une quelconque des revendications 10 à 16, la composition comprenant entre 10 et 40 % en poids d'azote, en particulier entre 12 et 25 % en poids, plus particulièrement entre 13 et 17 % en poids.

18. Composition selon l'une quelconque des revendications 10 à 17, la composition comprenant environ 15 % en poids d'azote, environ 25 % en poids de calcium, exprimé comme oxyde de calcium, environ 0,3 % en poids de bore, environ 0,2 % en poids de zinc et environ 0,01 % en poids de molybdène.

19. Composition selon l'une quelconque des revendications 10 à 18, la composition étant revêtue par une quantité d'une composition d'agents de conditionnement comprenant une cire, une huile minérale, une résine et un élastomère viscoélastique.

20. Composition selon la revendication 19 ou procédé selon l'une quelconque des revendications 7 à 8, la quantité de l'agent de conditionnement étant comprise entre 0,05 et 2,0 % en poids de la composition particulaire finale.

21. Utilisation d'une composition particulaire homogène, solide obtenue par un procédé selon l'une quelconque des revendications 1 à 9 ou d'une composition particulaire homogène, solide selon l'une quelconque des revendications 10 à 20, en tant qu'engrais ou en fertigation.
